(19) Europäisches Patentamt
European Patent Office
Office européen des brevets

(11) **EP 4 636 047 A1**

(12) **EUROPEAN PATENT APPLICATION**
published in accordance with Art. 153(4) EPC

(43) Date of publication:
**22.10.2025 Bulletin 2025/43**

(51) International Patent Classification (IPC):
*C09D 11/322* (2014.01)    *B41J 2/01* (2006.01)
*B41J 2/21* (2006.01)    *B41M 5/00* (2006.01)

(21) Application number: **23906962.8**

(52) Cooperative Patent Classification (CPC):
**B41J 2/01; B41J 2/21; B41M 5/00; C09D 11/322**

(22) Date of filing: **18.12.2023**

(86) International application number:
**PCT/JP2023/045243**

(87) International publication number:
**WO 2024/135602 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 23.12.2022  JP 2022207097
23.12.2022  JP 2022207098
05.12.2023  JP 2023205592

(71) Applicant: **Canon Kabushiki Kaisha
Tokyo, 146-8501 (JP)**

(72) Inventors:
• **KAWAMURA, Hidetaka
Tokyo 146-8501 (JP)**
• **TAYA, Akihiro
Tokyo 146-8501 (JP)**
• **MARUYAMA, Akio
Tokyo 146-8501 (JP)**
• **WATANABE, Taiki
Tokyo 146-8501 (JP)**
• **KATSUMOTO, Yuko
Tokyo 146-8501 (JP)**
• **HASEGAWA, Waka
Tokyo 146-8501 (JP)**

(74) Representative: **WESER & Kollegen
Patentanwälte PartmbB
Radeckestraße 43
81245 München (DE)**

(54) **INK, INK CARTRIDGE, AND INKJET RECORDING METHOD**

(57) Provided is an ink for ink jet, which is capable of recording an image excellent in concealing property and scratch resistance, and is excellent in sedimentation resistance. The ink for ink jet includes a first particle, a second particle, and a resin component. The first particle has a refractive index of 2.10 or more. The first particle has a volume-based cumulative 50% particle diameter of 100 nm or less. The second particle has a refractive index of 1.50 or less. The second particle has a volume-based cumulative 50% particle diameter of 120 nm or more. The resin component is at least one kind selected from the group consisting of: a resin particle; and a solvent-soluble resin. The resin component has a refractive index of 1.50 or more. A content (mass%) of the first particle is 1.1 times or more to 5.5 times or less in terms of a mass ratio to a content (mass%) of the resin component.

FIG. 1

EP 4 636 047 A1

**Description**

[Technical Field]

The present invention relates to an ink, an ink cartridge, and an ink jet recording method.

[Background Art]

In recent years, in the field of commercial printing or the like, a white image is sometimes recorded on a non-white recording medium, such as a transparent film, a translucent film, or colored paper. A white pigment such as titanium oxide is used as an ink for recording the white image from the viewpoints of the stability and cost of a material.
However, the specific gravity of titanium oxide is larger than those of materials to be used in inks of other colors. Thus, a difference in specific gravity from that of a solvent is also large, and there is a problem in that titanium oxide is liable to settle in the ink. In particular, when titanium oxide having a larger particle diameter is used or the content of titanium oxide is increased in order to enhance a concealing property and whiteness, titanium oxide is further liable to settle. As an ink that is excellent in whiteness and is easily redispersed even when a pigment settles, there has been proposed a white ink containing rutile-type titanium oxide having an average particle diameter of 300 nm or more and a urethane resin (Patent Literature 1).

[Citation List]

[Patent Literature]

PTL 1: Japanese Patent Laid-Open No. 2013-060513

[Summary of Invention]

[Technical Problem]

The sedimentation velocity V of a large particle in an ink may be calculated by the Stokes equation (the following equation (A)).

$$V=\{g(\rho S-\rho)d^2\}/18\mu \cdots (A)$$

d: particle diameter
g: gravitational acceleration
$\rho S$: density of particle
$\rho$: density of dispersion medium
$\mu$: viscosity of dispersion medium

According to the Stokes equation, it is understood that the sedimentation velocity V is increased in proportion to the square of a particle diameter, that is, a particle having a larger particle diameter is more liable to settle. As described above, the specific gravity of rutile-type titanium oxide is larger than those of other general materials to be used in an ink, and the sedimentation velocity thereof is higher. Thus, in the white ink proposed in Patent Literature 1, titanium oxide to be used as a pigment settles relatively easily.
Meanwhile, when titanium oxide having a small particle diameter is used, light is easily transmitted therethrough without being scattered. Thus, a scattering intensity is sharply decreased, and the concealing rate of an image to be recorded is not obtained. That is, it can be said that the sedimentation velocity of a particle and the concealing rate of an image to be recorded have a trade-off relationship. In addition, the image to be recorded is required to be excellent in scratch resistance as well as concealing rate.
Thus, an object of the present invention is to provide an ink for ink jet, which is capable of recording an image excellent in concealing property and scratch resistance, and is excellent in sedimentation resistance. Another object of the present invention is to provide an ink cartridge and an ink jet recording method each using the ink.

[Solution to Problem]

That is, according to the present invention, there is provided an ink for ink jet including: a first particle; a second particle; and a resin component, wherein the first particle has a refractive index of 2.10 or more, wherein the first particle has a volume-based cumulative 50% particle diameter of 100 nm or less, wherein the second particle has a refractive index of 1.50 or less, wherein the second particle has a volume-based cumulative 50% particle diameter of 120 nm or more, wherein the resin component is at least one kind selected from the group consisting of: a resin particle; and a solvent-soluble resin, wherein the resin component has a refractive index of 1.50 or more, and wherein a content (mass%) of the first particle is 1.1 times or more to 5.5 times or less in terms of a mass ratio to a content (mass%) of the resin component.

[Advantageous Effects of Invention]

According to the present invention, the ink for ink jet, which is capable of recording an image excellent in concealing property and scratch resistance, and is excellent in sedimentation resistance, can be provided. In addition, according to the present invention, the ink cartridge and the ink jet recording method each using the ink can be provided.

[Brief Description of Drawings]

[Fig. 1]

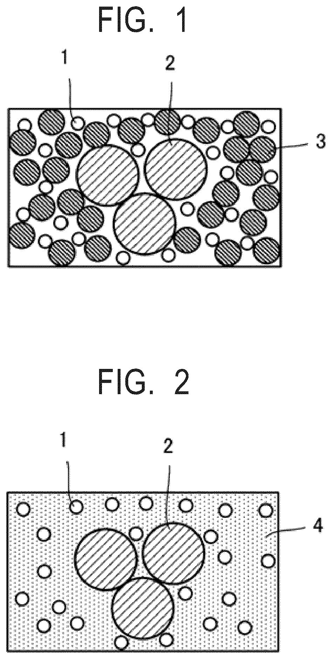

Fig. 1 is a schematic view for illustrating a drying process of an ink.
[Fig. 2]
Fig. 2 is a schematic view for illustrating the drying process of the ink.
[Fig. 3]

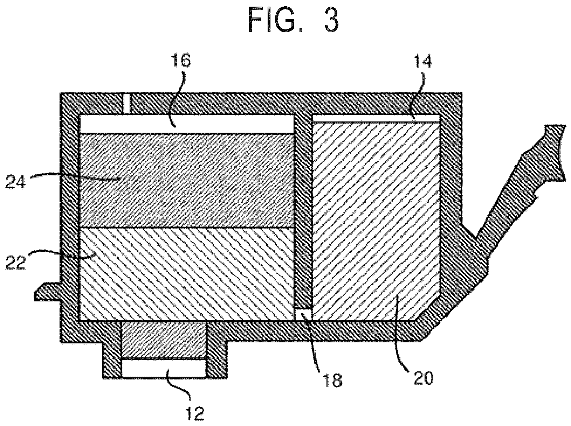

Fig. 3 is a sectional view for schematically illustrating an ink cartridge according to one embodiment of the present invention.
[Fig. 4A]

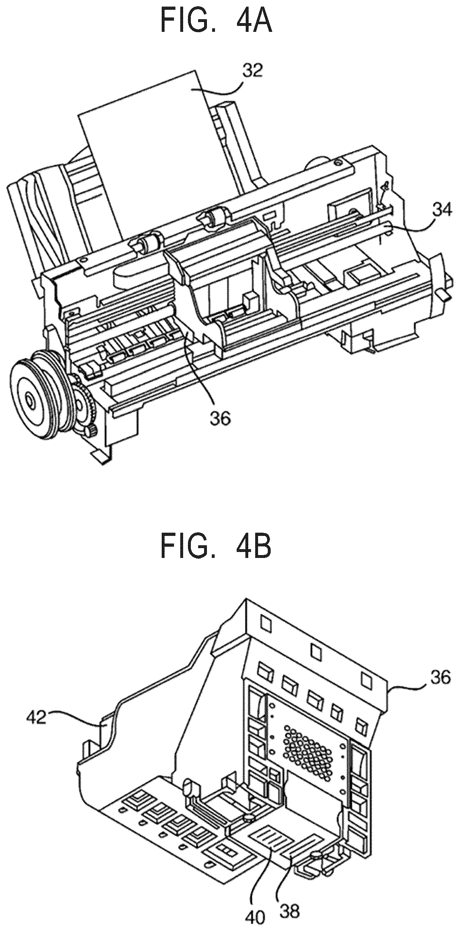

Fig. 4A is a perspective view of the main portion of an ink jet recording apparatus to be used in an ink jet recording method of the present invention.
[Fig. 4B]
Fig. 4B is a perspective view of a head cartridge of the ink jet recording apparatus to be used in the ink jet recording method of the present invention.

[Description of Embodiments]

The present invention is described in more detail below by way of preferred embodiments. In the present invention, when a compound is a salt, the salt is present in a state of dissociating into ions in an aqueous ink, but the expression "includes the salt" is used for convenience. In addition, an ink for ink jet is sometimes simply described as "ink". Physical property values are values at normal temperature (25°C) unless otherwise stated.

As a result of investigations, the inventors of the present invention have found that an ink, which is capable of recording an image excellent in concealing property and scratch resistance, and is excellent in sedimentation resistance, is obtained by satisfying the following requirements. Thus, the inventors have reached the present invention. That is, the ink of the present invention is an ink for ink jet including: a first particle, a second particle, and a resin component. The first particle has a refractive index of 2.10 or more and a volume-based cumulative 50% particle diameter of 100 nm or less. In addition, the second particle has a refractive index of 1.50 or less and a volume-based cumulative 50% particle diameter of 120 nm or more. Further, the resin component is at least one kind selected from the group consisting of: a resin particle; and a solvent-soluble resin, and has a refractive index of 1.50 or more. In addition, a content (mass%) of the first particle is 1.1 times or more to 5.5 times or less in terms of a mass ratio to a content (mass%) of the resin component.

How an ink, which is capable of recording an image excellent in concealing property and scratch resistance, and is excellent in sedimentation resistance, is obtained with the above-mentioned configuration is described with reference to Fig. 1 and Fig. 2. Fig. 1 and Fig. 2 are each a schematic view for illustrating a drying process of an ink. The ink includes a first particle having a refractive index of 2.10 or more and a volume-based cumulative 50% particle diameter of 100 nm or less. A substance having a refractive index of 2.10 or more has a relatively high refractive index, and examples of such compound may include metal oxides, such as titanium oxide and zirconia. Such compound has a large specific gravity as compared to that of a general material to be used in an ink, and it can be said that such compound is liable to settle according to the Stokes equation. However, when the above-mentioned particle diameter is decreased to 100 nm or less, sedimentation can be suppressed even in a metal oxide having a large specific gravity. In addition, the ink includes a second particle having a refractive index of 1.50 or less and a volume-based cumulative 50% particle diameter of 120 nm or more. The second particle is a particle having the above-mentioned particle diameter of 120 nm or more, which is larger than that of the first particle. However, the second particle is a compound having a refractive index of 1.50 or less and has a specific gravity smaller than that of the first particle, and hence it is conceived that sedimentation can be suppressed.

In an ink immediately after being applied to a recording medium, as illustrated in Fig. 1, it is conceived from the sizes of particle diameters that the first particle is aggregated after the second particle is aggregated. Then, as illustrated in Fig. 1, it is conceived that, when the second particle 2 starts being aggregated, the first particle 1 and the resin component 3 are brought into a state of being homogeneously mixed (so-called sea-island structure). When a liquid component of the ink is evaporated, the first particle 1 is present in a dispersed state in a dry film 4 as illustrated in Fig. 2. The first particle 1 has a small particle diameter and hence can transmit light. In addition, the first particle 1 has a refractive index as high as 2.10 or more and hence can increase the refractive index of the dry film 4 to be formed. Meanwhile, the second particle 2 has a large particle diameter and hence can scatter light. In addition, the refractive index of the second particle 2 is lower than that of the dry film 4 to be formed, and a sufficient difference in refractive index can be obtained. Thus, the second particle 2 can sufficiently scatter light to improve the concealing property of an image. Further, the resin component is present between the first particle and the second particle, and can fix the particles and increase the strength of the dry film to be formed. It is conceived that, through the above-mentioned mechanism, an image excellent in concealing property and scratch resistance can be recorded, and sedimentation resistance is improved.

The content (mass%) of the first particle in the ink is 1.1 times or more to 5.5 times or less in terms of a mass ratio to the content (mass%) of the resin component, and the ink includes the first particle in a relatively large amount. Thus, when the ink is further dried to form the resin component 3 into a film, the dry film 4 having the first particle 1 uniformly dispersed therein is formed as illustrated in Fig. 2. When the above-mentioned mass ratio is less than 1.1 times, the amount of the resin component is too large for the first particle, and hence the refractive index of the dry film to be formed is not increased. As a result, a difference in refractive index between the dry film and the second particle hardly occurs, and an image excellent in concealing property cannot be recorded. Meanwhile, when the above-mentioned mass ratio is more than 5.5 times, the amount of the resin component is too small and hence the above-mentioned action of fixing the first particle and the second particle cannot be exhibited, with the result that an image excellent in scratch resistance is not obtained.

When the refractive index of the first particle is less than 2.10, the refractive index of the dry film 4 to be formed is not increased, and a sufficient difference in refractive index from the resin particle 2 cannot be obtained. As a result, an image excellent in concealing property is not obtained. When the volume-based cumulative 50% particle diameter of the first particle is more than 100 nm, the first particle has a large specific gravity as described above, and hence the first particle is liable to settle in the ink. As a result, the sedimentation resistance of the ink is not obtained. Further, it has also been found that the concealing property of an image is not obtained. In addition, when the refractive index of the second particle is more than 1.50, a difference in refractive index from the dry film to be formed is too small, and hence an image excellent in concealing property is not obtained. When the volume-based cumulative 50% particle diameter of the second particle is less than 120 nm, the particle diameter is too small, and hence light cannot be scattered. As a result, an image excellent in concealing property is not obtained. When the ink does not include a resin particle or a solvent-soluble resin as the resin component, the first particle is aggregated at the time of the formation of the dry film, and a dry film in a state in which the first particle is mixed with the resin component as illustrated in Fig. 2 cannot be formed. As a result, an image excellent in concealing property and scratch resistance is not obtained.

<Ink>

The ink of the present invention is an ink for jet ink including a first particle, a second particle, and a resin component. The ink of the present invention may be an aqueous ink or an oil-based ink. Of those, an aqueous ink is preferred. The ink of the present invention is not required to be a so-called light-curable ink, which is cured by irradiation with light. Thus, the ink of the present invention is not required to include a polymerizable monomer. The respective components for forming the ink, the physical properties of the ink, and the like are described below.

(First Particle)

The first particle is a particle having a refractive index of 2.10 or more, preferably 2.50 or more to 2.80 or less, which is a relatively high refractive index. The content (mass%) of the first particle in the ink is preferably 5.0 mass% or more to 45.0 mass% or less, more preferably 7.0 mass% or more to 38.0 mass% or less with respect to the total mass of the ink.

The volume-based cumulative 50% particle diameter ($D_{50}$) of the first particle is 100 nm or less, preferably 5 nm or more to 60 nm or less from the viewpoint of transmitting light without scattering the light and the viewpoint of a sedimentation velocity. The simple term "average particle diameter" as used herein means a "volume-based cumulative 50% particle diameter ($D_{50}$)." The "volume-based cumulative 50% particle diameter ($D_{50}$)" refers to the diameter of a particle that accounts for 50% of the total volume of the measured particles, the ratio being calculated by integration from the small particle diameter side, in a particle diameter integration curve, and may be measured with a particle size distribution-measuring apparatus using a dynamic light scattering method. The measurement may be performed, for example, under the following measurement conditions: SetZero: 30 seconds, number of times of measurement: 3, measurement time: 180 seconds, shape: spherical shape, and refractive index: 2.60. In addition, a particle size analyzer (e.g., product name: "UPA-EX 150", manufactured by Nikkiso Co., Ltd.) using the dynamic scattering method, or the like may be used as the particle size distribution-measuring apparatus. Needless to say, the particle size distribution-measuring apparatus, the measurement conditions, and the like to be used are not limited to the foregoing.

Examples of the first particle may include titanium oxide and zirconia. That is, the first particle is preferably at least one kind selected from the group consisting of: titanium oxide; and zirconia, more preferably titanium oxide. Titanium oxide may be covered with alumina or zirconia on the surface of a particle. In addition, titanium oxide may be covered with an inorganic oxide, such as silica, zinc oxide, or zirconia, or an organic substance such as a polyol. When the surface of the particle is covered with the above-mentioned compound, the suppression of photocatalytic activity and the improvement of dispersibility are expected. There are three crystal types of titanium oxide: a rutile type; an anatase type; and a brookite type. Of those, rutile-type titanium oxide having low photocatalytic activity is preferably used. Examples of an industrial production method for titanium oxide may include a sulfuric acid method and a chlorine method. Titanium oxide produced by any of the production methods may be used. In addition, titanium oxide is not required to have a so-called core-shell structure. That is, titanium oxide is not required to be a material in which the surface of a core particle is covered with a shell layer formed of titanium oxide.

Zirconia is an oxide of zirconium (zirconium dioxide), which, like titanium, is a Group 4 element. An example of an industrial production method for zirconia may be a dry method involving refining zircon ore by electric melting. Another example thereof may be a wet method involving melting zircon ore with sodium hydroxide, separating silica, then decomposing the resultant with hydrochloric acid, and refining the resultant as zirconium oxychloride ($ZrOCl_2$) by hydrolysis. Zirconia produced by any of the production methods may be used. Of those, a wet method is preferred because high-purity zirconia can be obtained. Zirconia exists in three kinds of crystal phases: a monoclinic phase; a tetragonal phase; and a cubic phase. Stabilized zirconia having yttria added thereto is preferably used because transition to a stable crystal phase occurs depending on the temperature.

The zeta potential of the first particle is preferably -30 mV or less, in particular, -40 mV or less. In addition, the zeta potential is preferably -60 mV or more. The pH of an aqueous ink is generally in a range of from 7.0 to 10.0 in most cases. Thus, the zeta potential of the first particle is preferably -30 mV or less, in particular, -40 mV or less, in a range of a pH of from 7.0 to 10.0. In addition, the zeta potential is preferably -60 mV or more. The zeta potential is a physical property value to be an indicator of the charged state of the surface of a particle and may be measured by an electrophoretic light scattering method.

(Second Particle)

The second particle is a particle having a refractive index of 1.50 or less, preferably 1.20 or more to 1.45 or less, which is a relatively low refractive index. The content (mass%) of the second particle in the ink is preferably 12.0 mass% or more to 50.0 mass% or less, more preferably 15.0 mass% or more to 40.0 mass% or less with respect to the total mass of the ink.

The volume-based cumulative 50% particle diameter ($D_{50}$) of the second particle is 120 nm or more, preferably 140 nm or more to 400 nm or less, more preferably 140 nm or more to 300 nm or less from the viewpoint of scattering light.

Examples of the second particle may include a silica particle, a silicone-based particle, and a polytetrafluoroethylene resin particle. That is, it is preferred that the second particle be at least one kind selected from the group consisting of: a silica particle; a silicone-based particle; and a polytetrafluoroethylene resin particle. Colloidal silica in which a silica fine particle having a particle diameter of 120 nm or more to 500 nm or less is dispersed in water may be used as the silica particle. Of those, colloidal silica in which a silica particle of 120 nm or more to 400 nm or less is dispersed in water is preferably used. Colloidal silica is monodisperse and does not have a certain structure. Thus, the particle diameter of colloidal silica is not easily increased, and colloidal silica does not easily influence the ejection property of the ink. Colloidal silica may be produced, for example, by a method, such as a water glass method involving allowing silicate soda and sulfuric acid to react with each other to synthesize colloidal silica or an alkoxide method involving subjecting an alkyl silicate to hydrolysis under a basic catalyst.

The silicone-based particle is a particle formed of a silicone. The silicone is a polymer formed of silicon atoms linked together with siloxane bonds (···Si-O-Si···). The silicone includes a silicone rubber and a silsesquioxane having a polyhedral cluster. A method of producing the silicone-based particle is, for example, a method involving dispersing a composition containing both-end divinylpolydimethylsilicone and polyhydrogenmethylsilicone in water in the presence of a surfactant and then curing the resultant in the presence of a catalyst. In addition, the silsesquioxane may be produced, for example, by subjecting a trifunctional organosilicon monomer to hydrolysis.

A PTFE resin for forming the polytetrafluoroethylene (PTFE) resin particle is a so-called fluororesin formed of a fluorine atom and a carbon atom. The PTFE resin is known as a resin having a remarkably low refractive index.

The zeta potential of the second particle is preferably -5 mV or less. The pH of an aqueous ink is generally in a neutral to weakly alkaline range, specifically in a range of from 7.0 to 10.0 in most cases. Thus, the zeta potential of the second particle is preferably -5 mV or less in a range of a pH of from 7.0 to 10.0. In addition, the zeta potential is preferably -30 mV or more.

It is preferred that the absolute value of the zeta potential of the second particle be smaller than the absolute value of the zeta potential of the first particle. When the above-mentioned relationship is satisfied, the second particle is first aggregated more easily, and a state of a recorded image in which the first particle is mixed with the resin component can be easily obtained. As a result, the refractive index of a dry film is improved, and an image having a further improved concealing property can be recorded.

(Resin Component)

The ink of the present invention includes a resin component. When the ink includes the resin component, the ink enables an image excellent in glossiness as well as scratch resistance to be recoded as compared to an ink substantially free of the resin component, and hence can be an ink suitable in the field of commercial printing or the like. The refractive index of the resin component is 1.50 or more, preferably 1.50 or more to 1.70 or less. The content (mass%) of the resin component in the ink is preferably 2.5 mass% or more to 17.0 mass% or less, more preferably 2.5 mass% or more to 14.0 mass% or less with respect to the total mass of the ink. When a dispersant made of a resin (resin dispersant) for dispersing the first particle and the second particle in the ink is used, such resin dispersant is also included in the "resin component."

The resin component is at least one kind selected from the group consisting of: a resin particle; and a solvent-soluble resin. Examples of the resin component may include an acrylic resin, a urethane-based resin, a urea-based resin, a polysaccharide, and a polypeptide. Of those, an acrylic resin and a urethane-based resin are preferred, and an acrylic resin including a unit derived from (meth)acrylic acid or a (meth)acrylic acid ester is more preferred.

Resins each having a hydrophilic unit and a hydrophobic unit as constituent units are each preferred as the acrylic resin. Of those, a resin having a hydrophilic unit derived from (meth)acrylic acid and a hydrophobic unit derived from at least one of a monomer having an aromatic ring or a (meth)acrylic acid ester is preferred. In particular, a resin having a hydrophilic unit derived from (meth)acrylic acid and a hydrophobic unit derived from at least one monomer of styrene or $\alpha$-methylstyrene is preferred.

The hydrophilic unit is a unit having a hydrophilic group such as an anionic group. The hydrophilic unit may be formed, for example, by polymerizing a hydrophilic monomer having a hydrophilic group. Specific examples of the hydrophilic monomer having a hydrophilic group may include: acidic monomers having carboxylic acid groups, such as (meth)acrylic acid, itaconic acid, maleic acid, and fumaric acid; and anionic monomers, such as anhydrides and salts of these acidic monomers. Examples of cations for forming the salts of the acidic monomers may include ions of lithium, sodium, potassium, ammonium, and an organic ammonium.

The hydrophobic unit is a unit free of a hydrophilic group such as an anionic group. The hydrophobic unit may be formed, for example, by polymerizing a hydrophobic monomer free of a hydrophilic group such as an anionic group. Specific examples of the hydrophobic monomer may include: monomers each having an aromatic ring, such as styrene, $\alpha$-methylstyrene, and benzyl (meth)acrylate; and (meth)acrylic acid ester-based monomers, such as methyl (meth)acrylate, butyl (meth)acrylate, and 2-ethylhexyl (meth)acrylate.

When the ink of the present invention is an aqueous ink, it is preferred that the ink of the present invention include a resin particle (water-dispersible resin) as the resin component because the viscosity (1.0 mPa·s or more to 10.0 mPa·s or less) of a general aqueous ink can be obtained. The same resin as that described above may be appropriately selected and used as a resin for forming the resin particle.

Meanwhile, when the ink of the present invention is an oil-based ink, it is preferred that the ink of the present invention include a solvent-soluble resin as the resin component. The solvent-soluble resin is a resin that may be dissolved in a water-insoluble organic solvent described later to be used in an oil-based ink. Any solvent-soluble resin may be used as long as the resin is dissolved in an organic solvent. Examples thereof may include an acrylic resin, a styrene-butadiene copolymer resin, a urethane resin, a polyvinyl acetal resin, a polyester resin, a phosphoric acid polyester resin, an epoxy resin, a melamine resin, a phenol resin, a phenoxy resin, a cellulose derivative resin, and a fluorine-based polymer. When an attempt is made to measure a volume-based cumulative 50% particle diameter with the above-mentioned particle size distribution-measuring apparatus using a dynamic light scattering method, and the particle diameter is not measured, it can be determined that a certain resin is a solvent-soluble resin. Meanwhile, when the particle diameter is measured, it can be determined that a certain resin is a resin particle.

The content (mass%) of the first particle is 1.1 times or more to 5.5 times or less, preferably 1.1 times or more to 5.0 times or less in terms of a mass ratio to the content (mass%) of the resin component. When the content is set to a ratio in the above-mentioned ranges, the ink is excellent in sedimentation resistance, and can record an image excellent in scratch resistance as described above.

The ratio of the content (vol%) of the second particle to the total content (vol%) of the first particle, the second particle, and the resin component is preferably 40.0% or more to 70.0% or less, more preferably 45.0% or more to 65.0% or less. In addition, the ratio of the content (vol%) of the first particle to the total content (vol%) of the first particle and the resin component is preferably 30.0% or more to 60.0% or less, more preferably 35.0% or more to 55.0% or less. When the ratio of the content of the second particle is set to the above-mentioned ranges, the ratio of the second particle having a low refractive index with respect to a dry film having a high refractive index to be formed is adjusted to an appropriate range. In addition, when the ratio of the content of the first particle is set to the above-mentioned ranges, the refractive index of the dry film to be formed can be sufficiently increased, and a difference in refractive index from the second particle can be sufficiently increased. As a result, an image having a further improved concealing property can be recorded.

In the case where the ratio of the content of the second particle is less than 40.0%, even when a difference in refractive index is sufficient, the second particle that can scatter light with a low refractive index is insufficient, with the result that an image having a sufficient concealing property may not be obtained. Meanwhile, when the ratio of the content of the second particle is more than 70.0%, the amount of the second particle that can scatter light with a low refractive index is too large, and the first particle that increases the refractive index of the resin film to be formed and the resin component are insufficient, with the result that an image having a sufficient concealing property may not be obtained. In the case where the ratio of the content of the first particle is less than 30.0%, even when the first particle is present, the refractive index of the dry film to be formed is not increased significantly, and a difference in refractive index from the second particle is decreased. As a result, an image having a sufficient concealing property may not be obtained. Meanwhile, when the ratio of the content of the first particle is more than 60.0%, the resin component that can exhibit the action of fixing the first particle and the second particle is insufficient, with the result that an image having sufficient scratch resistance may not be obtained.

The zeta potential of the resin particle to be used as the resin component is preferably -30 mV or less. In addition, it is preferred that the absolute value of the zeta potential of the second particle be smaller than any of the absolute value of the zeta potential of the first particle and the absolute value of the zeta potential of the resin component. With this configuration, in the ink immediately after being applied to a recording medium, the first particle and the resin component are aggregated substantially simultaneously after the aggregation of the second particle, and a state in which the first particle and the resin component are equally mixed can be easily obtained. As a result, an image having a further improved concealing property can be recorded. The zeta potential of the resin particle is preferably -60 mV or more, more preferably -50 mV or more.

The resin component is preferably a non-crosslinked resin. The non-crosslinked resin means a resin substantially free of a unit derived from a crosslinkable monomer. When the non-crosslinked resin is used as the resin component, the resin component is softened when the ink is dried, and the strength of the dry film can be increased. Thus, the scratch resistance of an image to be recorded can be improved.

The refractive index ($n_2$) of the second particle, and the refractive index ($n_M$) of the dry film to be formed of the first particle and the resin component preferably satisfy the relationship of the following formula (1), and more preferably satisfy the relationship of the following formula (1-1). When the $n_2$ and the $n_M$ satisfy the relationship of the following formula (1), the difference between the refractive index of the dry film to be formed of the first particle and the resin component, and the refractive index of the second particle can be further increased, and hence the concealing property of an image to be recorded can be further improved.

$$n_2 + 0.4 \leq n_M \cdots (1)$$

$$n_2 + 0.5 \leq n_M \cdots (1\text{-}1)$$

The refractive index $n_M$ of the dry film to be formed of the first particle and the resin component may be calculated by the following equation (B).

$$n_M = [\{(M_1/D_1) \times n_1\} + \{(M_3/D_3) \times n_3\}] / \{(M_1/D_1) + (M_3/D_3)\} \cdots (B)$$

$M_1$: mass (g) of first particle
$D_1$: density (g/cm$^3$) of first particle
$n_1$: refractive index of first particle
$M_3$: mass (g) of resin component
$D_3$: density (g/cm$^3$) of resin component
$n_3$: refractive index of resin component

(Liquid Medium)

The ink is an aqueous ink or an oil-based (solvent-based) ink including a liquid medium. Water or an aqueous medium that is a mixed solvent of water and a water-soluble organic solvent is preferably used as the liquid medium of the aqueous ink. Deionized water (ion-exchanged water) is preferably used as the water. The content (mass%) of the water in the ink is preferably 40.0 mass% or more to 95.0 mass% or less with respect to the total mass of the ink.

The water-soluble organic solvent is not particularly limited as long as the solvent is water-soluble (preferably a solvent that is dissolved in water at any ratio at 25°C). Specifically, monohydric or polyhydric alcohols, alkylene glycols, glycol ethers, nitrogen-containing polar compounds, sulfur-containing polar compounds, and the like may be used.

The content (mass%) of the water-soluble organic solvent in the ink is preferably 5.0 mass% or more to 50.0 mass% or less, more preferably 10.0 mass% or more to 40.0 mass% or less with respect to the total mass of the ink. When the content of the water-soluble organic solvent is less than 5.0 mass%, reliability such as sticking resistance may become insufficient.

Water-insoluble organic solvents, such as hydrocarbon compounds, ketones, ethers, acetic acid esters, and aromatic compounds, are each preferably used as the liquid medium of the oil-based ink. In addition, the above-mentioned water-soluble organic solvents to be used in the aqueous ink may each be used. The content (mass%) of the organic solvent in the oil-based ink is preferably 50.0 mass% or more to 95.0 mass% or less with respect to the total mass of the ink.

(Other Additives)

The ink may include a water-soluble organic compound that is solid at normal temperature, for example, a polyhydric alcohol, such as trimethylolpropane or trimethylolethane, urea or a urea derivative such as ethylene urea, as required in addition to the above-mentioned components. Further, the ink may include any one of various additives, such as a surfactant, a pH adjuster, a rust inhibitor, an antiseptic, an antifungal agent, an antioxidant, an anti-reducing agent, an evaporation accelerator, and a chelating agent, as required.

(Physical Properties of Ink)

The ink is an ink to be applied to an ink jet system, and hence it is preferred that the physical property thereof be appropriately controlled. When the ink is an aqueous ink, the surface tension of the aqueous ink at 25°C is preferably 10 mN/m or more to 60 mN/m or less, more preferably 20 mN/m or more to 40 mN/m or less. In addition, the viscosity of the aqueous ink at 25°C is preferably 1.0 mPa·s or more to 10.0 mPa·s or less. The pH of the aqueous ink at 25°C is preferably 7.0 or more to 10.0 or less, more preferably 9.0 or more to 10.0 or less.

Meanwhile, when the ink is an oil-based ink, the surface tension of the oil-based ink at 25°C is preferably 15.0 mN/m or more to 40.0 mN/m or less, more preferably 18.0 mN/m or more to 36.0 mN/m or less. In addition, the viscosity of the oil-based ink at 25°C is preferably 1.5 mPa·s or more to 40.0 mPa·s or less.

<Ink Cartridge>

An ink cartridge of the present invention includes an ink and an ink storage portion configured to store the ink. In addition, the ink stored in the ink storage portion is the ink of the present invention described above. Fig. 3 is a sectional view for schematically illustrating an ink cartridge according to one embodiment of the present invention. As illustrated in Fig. 3, an ink supply port 12 for supplying an ink to a recording head is arranged on the bottom surface of the ink cartridge. The inside of the ink cartridge is the ink storage portion for storing the ink. The ink storage portion includes an ink storage chamber 14 and an absorbent storage chamber 16, and the chambers communicate to each other through a communication port 18. In addition, the absorbent storage chamber 16 communicates to the ink supply port 12. While a liquid ink 20 is stored in the ink storage chamber 14, absorbents 22 and 24 each configured to hold the ink in a state of being impregnated therewith are stored in the absorbent storage chamber 16. The ink storage portion may be a form that is free of any ink storage chamber configured to store the liquid ink and is configured to hold the total amount of the ink to be stored with the absorbents. In addition, the ink storage portion may be a form that is free of any absorbent and is configured to store the total amount of the ink in a liquid state. Further, an ink cartridge of a form configured to include the ink storage portion and a recording head may be adopted.

<Ink Jet Recording Method>

An ink jet recording method of the present invention is a method including ejecting the ink of the present invention described above from a recording head of an ink jet system to record an image on a recording medium. A system of ejecting the ink is, for example, a system involving applying mechanical energy to the ink or a system involving applying thermal energy to the ink. In the present invention, the system involving applying the thermal energy to the ink to eject the ink is particularly preferably adopted. The step of the ink jet recording method only needs to be a known step except that the ink of the present invention is used.

For example, when an image is recorded with a white ink, the ink can be directly applied to a general ink jet recording method. In addition, when a white ink is used for surface preparation for a color ink, it is only required that an image be recorded by applying a color ink (ink of black, cyan, magenta, yellow, or the like) so that the color ink overlaps with at least part of a region to which the white ink has been applied. In addition, the foregoing may be used for back printing in which a white ink is applied so as to overlap with at least part of a region to which a color ink has been applied.

Fig. 4A and Fig. 4B are views for schematically illustrating an example of an ink jet recording apparatus to be used in the ink jet recording method of the present invention. Fig. 4A is a perspective view of the main portion of the ink jet recording apparatus and Fig. 4B is a perspective view of a head cartridge. A conveying unit (not shown) configured to convey a recording medium 32 and a carriage shaft 34 are arranged in the ink jet recording apparatus. A head cartridge 36 may be mounted on the carriage shaft 34. The head cartridge 36 includes recording heads 38 and 40 and is configured so that an ink cartridge 42 may be set therein. While the head cartridge 36 is conveyed along the carriage shaft 34 in a main scanning direction, the ink (not shown) is ejected from the recording heads 38 and 40 toward the recording medium 32. Then, the recording medium 32 is conveyed by the conveying unit (not shown) in a sub-scanning direction. Thus, the image is recorded on the recording medium 32.

Any recording medium may be used as a recording medium on which an image is recorded with the ink of the present invention. The ink of the present invention is an ink that can record an image such as a white image excellent in concealing property, and hence non-white recording media, such as a transparent film, a translucent film, and colored paper, may be suitably used.

Multi-pass recording, in which the application of an ink to a unit region of a recording medium is performed by being divided into a plurality of relative scans between the recording head and the recording medium, is preferred. In particular, it is preferred that the application of a white ink to a unit region and the application of a color ink thereto be performed in different relative scans. Thus, a period of time until the respective inks are brought into contact with each other is lengthened, and mixing is easily suppressed. The unit region may be set as any region, such as one pixel or one band.

[Examples]

The present invention is described in more detail below by way of Examples and Comparative Examples. However, the present invention is by no means limited to Examples below, and various modifications may be made without departing from the gist of the present invention. In the description of the amounts of components, "part(s)" and "%" are by mass unless otherwise specified.

<Preparation of Materials>

(First Particle)

First particles 1 to 7 of kinds shown in Table 1 were prepared. The average particle diameter (volume-based cumulative 50% particle diameter ($D_{50}$)) of each of the particles was measured with a particle diameter distribution measuring apparatus (product name: "UPA-EX 150", manufactured by Nikkiso Co., Ltd.) using a dynamic light scattering method. The first particle 4, which was powder of titanium oxide, was dispersed in methyl ethyl ketone through use of a dispersant (product name: "Disperbyk-111", manufactured by BYK-Chemie Japan KK). Zirconia beads (diameter: 10 $\mu$m, manufactured by Niimi Sangyo Co., Ltd.) and a paint shaker (manufactured by Toyo Seiki Co., Ltd.) were used at the time of the dispersion. In addition, the first particle 6, which was powder of titanium oxide, was dispersed in water by mixing 70.0 parts of ion-exchanged water with 30.0 parts of P25, which was a mixed crystal containing 70% of an anatase-type crystal and 30% of a rutile-type crystal, and stirring the mixture for 10 minutes under ice cooling with an ultrasonic homogenizer (UD-200, manufactured by Tomy Seiko Co., Ltd.).

The first particle 7 was prepared from yttrium oxide powder through use of a dispersion method for an alumina fine particle in the literature (Kagaku Kogaku Ronbunshu/Vol. 29 (2003) No. 6/pp. 753-759). Specifically, a 5% aqueous solution of polyacrylic acid (manufactured by Sigma-Aldrich) having a molecular weight of 2,000 was prepared, and yttrium oxide powder (manufactured by Adachi New Industrial Companies) was added to the aqueous solution so that its solid concentration was 10%. Thus, a suspension was prepared. The prepared suspension was shaken with a shaker (product name: "SR-1D", manufactured TAITEC Corporation) at a rate of 300 times per minute for 24 hours to provide a liquid containing yttrium oxide (content of yttrium oxide: 10%).

The zeta potentials of the first particles 1 to 5 and 7 in a range of a pH of from 7 to 10 were all in a range of from -30 mV to -50 mV. Meanwhile, the zeta potential of the first particle 6 was -7.3 mV. The above-mentioned zeta potentials were calculated by measuring the mobilities of the particles with a zeta potential measuring apparatus (product name:

"ELSZ-2000ZS", manufactured by Otsuka Electronics Co., Ltd.) using electrophoresis.

[Table 1]

| Table 1: Kind of first particle | | | | | | |
|---|---|---|---|---|---|---|
| First particle | Product name | Manufacturer | Kind | Average particle diameter $D_{50}$ (nm) | Density (g/cm$^3$) | Refractive index $n_1$ |
| 1 | STS-21 | Ishihara Sangyo Kaisha, Ltd. | Titanium oxide sol | 50 | 3.78 | 2.55 |
| 2 | TTO-55 | Ishihara Sangyo Kaisha, Ltd. | Titanium oxide sol | 100 | 4.23 | 2.72 |
| 3 | STR-100W | Sakai Chemical Industry Co., Ltd. | Titanium oxide sol | 120 | 4.23 | 2.72 |
| 4 | MT-100WB | Tayca Corporation | Titanium oxide powder | 15 | 4.23 | 2.72 |
| 5 | ZSL00014 | Daiichi Kigenso Kagaku Kogyo Co., Ltd. | Zirconia sol | 20 | 5.68 | 2.17 |
| 6 | P25 | Degussa | Titanium oxide powder | 50 | 3.92 | 2.58 |
| 7 | - | - | Yttrium oxide powder | 29 | 1.63 | 1.87 |

(Second Particle)

Second particles 1 to 9 of kinds shown in Table 2 were prepared. Silica of each of the second particles 1 to 6 was prepared from tetraethyl orthosilicate (manufactured by Tokyo Chemical Industry Co., Ltd.) by the Stober method in an alcohol mixed solvent. In this case, the particle diameter of each of the particles was controlled by selecting and using any one of methanol/ethanol and ethanol/isopropanol as the alcohol mixed solvent. A sediment obtained by subjecting a silica/alcohol mixed solvent dispersion liquid to centrifugation was redispersed in water with an ultrasonic cleaning device to prepare a silica sol having a dispersion medium replaced by water.

Silica powder (product name: "Silica Sol MP-2040", manufactured by Nissan Chemical Corporation) was used as the second particle 7. In addition, the second particle 8 was prepared as described below. PTFE powder (product name: "Lubron L2", manufactured by Daikin Industries, Ltd.) was dispersed in a mixed solvent of n-propanol and a fluorine-based solvent (product name: "Zeolora", manufactured by Zeon Corporation) through use of a fluorine-based polymer dispersant (product name: "GF-400", manufactured by Toagosei Co., Ltd.). At the time of the dispersion, a homogenizer (product name: "ULTRA-TURRAX", manufactured by IKA Germany) was used. The dispersion liquid in which the PTFE powder was dispersed in the mixed solvent was subjected to centrifugation treatment so that the PTFE powder settled. After that, the PTFE powder was redispersed in methyl ethyl ketone with a homogenizer so that the solvent was replaced by methyl ethyl ketone. Thus, the second particle 8, which was a methyl ethyl ketone dispersion liquid of the PTFE powder, was prepared.

The second particle 9 was prepared by the preparation method for the ink 3 of Example 1 in International Publication No. WO2018/190848. Specifically, an alumina particle dispersion liquid in which the content of an amphoteric alumina particle (product name: "DISPAL 11N7-80", dispersed particle diameter: 240 nm, manufactured by Sasol) was 10% was prepared. The pH of the alumina particle dispersion liquid was adjusted to 4.0 with a strong acid (1 mol/L hydrochloric acid), and the alumina particle dispersion liquid was mixed with a propeller mixer (manufactured by ESCO Co., Ltd.) until the dispersion liquid became uniform. After that, the resultant was pulverized with a bead mill to provide a liquid containing an alumina particle (content of an alumina particle: 10%).

The zeta potentials of the second particles 1 to 6 and 9 in a range of a pH of from 7 to 10 measured and calculated with a zeta potential measuring apparatus were all in a range of from -5 mV to -10 mV. Meanwhile, the zeta potential of the second particle 7 in a range of a pH of from 7 to 10 was in a range of from -30 mV to -40 mV, and the zeta potential of the second particle 8 was in a range of from -30 mV to -40 mV.

[Table 2]

| Table 2: Kind of second particle | | | | |
|---|---|---|---|---|
| Second particle | Kind | Average particle diameter $D_{50}$ (nm) | Density (g/cm$^3$) | Refractive index $n_2$ |
| 1 | Silica sol | 150 | 2.20 | 1.40 |
| 2 | Silica sol | 120 | 2.20 | 1.40 |
| 3 | Silica sol | 300 | 2.20 | 1.40 |
| 4 | Silica sol | 400 | 2.20 | 1.40 |
| 5 | Silica sol | 60 | 2.20 | 1.40 |
| 6 | Silica sol | 100 | 2.20 | 1.40 |
| 7 | Silica powder | 200 | 2.20 | 1.40 |
| 8 | PTFE powder | 250 | 2.20 | 1.35 |
| 9 | Alumina | 240 | 3.95 | 1.63 |

(Resin Component)

Resin components 1 to 5 (resin particles) and a resin component 6 (solvent-soluble resin) of kinds shown in Table 3 were prepared. The zeta potentials of the resin particles 1, 2, 4 and 5 in a range of a pH of from 7 to 10 measured and calculated with a zeta potential measuring apparatus were all in a range of from -30 mV to -50 mV. Meanwhile, the zeta potential of the resin particle 3 in a range of a pH of from 7 to 10 was -7.3 mV. The resin particles 1 to 3 are all non-crosslinked resins, and the resin particles 4 and 5 are crosslinked resins.

[Table 3]

| Table 3: Kind of resin component | | | | | |
|---|---|---|---|---|---|
| Resin component | Product name | Manufacturer | Kind | Density (g/cm$^3$) | Refractive index $n_3$ |
| 1 | VINYBLAN 701 | Nissin Chemical Industry Co., Ltd. | Vinyl chloride emulsion | 1.40 | 1.50 |
| 2 | SF-860 | DKS Co. Ltd. | Urethane emulsion | 1.13 | 1.52 |
| 3 | VINYBLAN 705 | Nissin Chemical Industry Co., Ltd. | Vinyl chloride emulsion | 1.40 | 1.50 |
| 4 | SF-E4800 | DKS Co. Ltd. | Urethane emulsion | 1.13 | 1.52 |
| 5 | VINYBLAN 2586 | Nissin Chemical Industry Co., Ltd. | Vinyl chloride emulsion | 1.40 | 1.50 |
| 6 | ARON GF-400 | Toagosei Co., Ltd. | Fluorine-based polymer dispersant*1 (solvent-soluble resin) | 1.40 | 1.60 |
| *1: Dispersant of PTFE powder | | | | | |

<Preparation of Ink>

Respective components were mixed so as to achieve compositions (unit: %) shown in the upper rows of Tables 4-1 to 4-5, and then potassium hydroxide was added to adjust the pH in a range of from 8 to 9. Each ink was prepared by pressure filtration through a microfilter (manufactured by FUJIFILM Corporation) having a pore size of 3.0 $\mu$m. The characteristics of each of the prepared inks are shown in the lower rows of Tables 4-1 and 4-2. The meanings of abbreviations in Tables 4-1 and 4-2 are as described below. In addition, the "refractive index $n_M$ of dry film" is a value calculated by the above-mentioned equation (A). The following phosphoric acid polyester-based polymers are resin components.

·Gly: glycerin (manufactured by Kishida Chemical Co., Ltd.)
·EG: ethylene glycol (manufactured by Kishida Chemical Co., Ltd.)
·AE100: nonionic surfactant (manufactured by Kawaken Fine Chemicals Co., Ltd.)
·DISPERBYK-110: phosphoric acid polyester-based polymer (manufactured by BYK-Chemie Japan KK)
·DISPERBYK-111: phosphoric acid polyester-based polymer (manufactured by BYK-Chemie Japan KK)

X and Y in the lower rows of Tables 4-1 to 4-5 are values calculated in accordance with the following equations (1) and (2), respectively.

$$X=\{V_2/(V_1+V_2+V_3)\}\times100 \cdots (1)$$

$$Y=\{V_1/(V_1+V_3)\}\times100 \cdots (2)$$

$V_1$: content (vol%) of first particle
$V_2$: content (vol%) of second particle
$V_3$: content (vol%) of resin component

The $V_3$ is calculated so as to include the above-mentioned polyester phosphate-based polymers that are resin components.

[Table 4-1]

| Table 4-1: Composition and characteristics of ink | | | | | | | | | | |
|---|---|---|---|---|---|---|---|---|---|---|
| | Example | | | | | | | | | |
| | 1 | 2 | 3 | 4 | 5 | 6 | 7 | 8 | 9 | 10 |
| First particle 1 | 15.8 | 15.4 | 7.6 | 25.5 | 13.8 | 7.8 | 7.8 | | 16.3 | 16.3 |
| First particle 2 | | | | | | | | | | |
| First particle 3 | | | | | | | | | | |
| First particle 4 | | | | | | | | 24.0 | | |
| First particle 5 | | | | | | | | | | |
| First particle 6 | | | | | | | | | | |
| First particle 7 | | | | | | | | | | |
| Second particle 1 | 25.3 | 20.0 | 33.9 | 16.6 | 31.3 | | | 20.2 | 26.1 | 21.1 |
| Second particle 2 | | | | | | | | | | |
| Second particle 3 | | | | | | 34.4 | | | | |
| Second particle 4 | | | | | | | 34.4 | | | |
| Second particle 5 | | | | | | | | | | |
| Second particle 6 | | | | | | | | | | |
| Second particle 7 | | | | | | | | | | |
| Second particle 8 | | | | | | | | | | |
| Second particle 9 | | | | | | | | | | |
| Resin component 1 | 7.3 | 13.3 | 6.5 | 6.3 | 3.5 | 6.6 | 6.6 | 5.5 | | |
| Resin component 2 | | | | | | | | | 6.1 | 11.3 |
| Resin component 3 | | | | | | | | | | |
| Resin component 4 | | | | | | | | | | |
| Resin component 5 | | | | | | | | | | |
| Resin component 6 | | | | | | | | | | |

(continued)

| Table 4-1: Composition and characteristics of ink | | | | | | | | | | |
|---|---|---|---|---|---|---|---|---|---|---|
| | Example | | | | | | | | | |
| | 1 | 2 | 3 | 4 | 5 | 6 | 7 | 8 | 9 | 10 |
| Gly | 2.0 | 2.0 | 2.0 | 2.0 | 2.0 | 2.0 | 2.0 | 2.0 | 2.0 | 2.0 |
| EG | 7.0 | 7.0 | 7.0 | 7.0 | 7.0 | 7.0 | 7.0 | 7.0 | 7.0 | 7.0 |
| MEK | | | | | | | | | | |
| DEGMEE | | | | | | | | | | |
| AE100 | 0.5 | 0.5 | 0.5 | 0.5 | 0.5 | 0.5 | 0.5 | 0.5 | 0.5 | 0.5 |
| DISPERBYK-110 | | | | | | | | | | |
| DISPERBYK-111 | | | | | | | | | | |
| Ion-exchanged water | 42.1 | 41.9 | 42.1 | 42.0 | 42.0 | 41.9 | 41.9 | 42.0 | 42.0 | 41.9 |
| Content of first particle/content of resin component (times) | 2.2 | 1.2 | 1.2 | 4.0 | 3.9 | 1.2 | 1.2 | 4.4 | 2.7 | 1.4 |
| Refractive index $n_M$ of dry film | 1.97 | 1.82 | 1.82 | 2.13 | 2.12 | 1.82 | 1.82 | 2.22 | 1.98 | 1.83 |
| Content $V_1$ (vol%) of first particle | 4.2 | 4.1 | 2.0 | 6.7 | 3.7 | 2.1 | 2.1 | 5.7 | 4.3 | 4.3 |
| Content $V_2$ (vol%) of second particle | 11.5 | 9.1 | 15.4 | 7.5 | 14.2 | 15.6 | 15.6 | 9.2 | 11.9 | 9.6 |
| Content $V_3$ (vol%) of resin component | 5.2 | 9.5 | 4.6 | 4.5 | 2.5 | 4.7 | 4.7 | 3.9 | 5.4 | 10.0 |
| X (%) | 55.0 | 40.1 | 70.0 | 40.1 | 69.6 | 69.6 | 69.6 | 48.9 | 55.1 | 40.2 |
| Y (%) | 44.7 | 30.1 | 30.3 | 59.8 | 59.7 | 30.9 | 30.9 | 59.4 | 44.3 | 30.1 |

[Table 4-2]

| Table 4-2: Composition and characteristics of ink | | | | | | | | | | |
|---|---|---|---|---|---|---|---|---|---|---|
| | Example | | | | | | | | | |
| | 11 | 12 | 13 | 14 | 15 | 16 | 17 | 18 | 19 | 20 |
| First particle 1 | 7.8 | 26.3 | | | | | | | 15.4 | 7.6 |
| First particle 2 | | | | | | | | | | |
| First particle 3 | | | | | | | | | | |
| First particle 4 | | | | | | | | | | |
| First particle 5 | | | 23.5 | | | | | | | |
| First particle 6 | | | | 15.8 | 15.4 | 7.6 | 23.5 | 14.0 | | |
| First particle 7 | | | | | | | | | | |
| Second particle 1 | 35.3 | 17.1 | 20.2 | | | | | | 19.4 | 34.3 |
| Second particle 2 | | | | | | | | | | |
| Second particle 3 | | | | | | | | | | |
| Second particle 4 | | | | | | | | | | |
| Second particle 5 | | | | | | | | | | |
| Second particle 6 | | | | | | | | | | |
| Second particle 7 | | | | | | | | | | |
| Second particle 8 | | | | 22.6 | 17.7 | 30.7 | 14.9 | 30.4 | | |

(continued)

| Table 4-2: Composition and characteristics of ink | | | | | | | | | | |
|---|---|---|---|---|---|---|---|---|---|---|
| | Example | | | | | | | | | |
| | 11 | 12 | 13 | 14 | 15 | 16 | 17 | 18 | 19 | 20 |
| Second particle 9 | | | | | | | | | | |
| Resin component 1 | | | 4.7 | | | | | | 13.3 | 6.5 |
| Resin component 2 | 5.4 | 5.3 | | | | | | | | |
| Resin component 3 | | | | | | | | | | |
| Resin component 4 | | | | | | | | | | |
| Resin component 5 | | | | | | | | | | |
| Resin component 6 | | | | 3.1 | 5.8 | 4.7 | 2.1 | 2.2 | | |
| Gly | 2.0 | 2.0 | 2.0 | | | | | | 2.0 | 2.0 |
| EG | 7.0 | 7.0 | 7.0 | | | | | | 7.0 | 7.0 |
| MEK | | | | 12.5 | 12.5 | 12.4 | 12.0 | 12.2 | | |
| DEGMEE | | | | 43.8 | 43.6 | 43.4 | 41.9 | 42.7 | | |
| AE100 | 0.5 | 0.5 | 0.5 | | | | | | 0.5 | 0.5 |
| DISPERBYK-110 | | | | | | | | | | |
| DISPERBYK-111 | | | | 2.2 | 5.0 | 1.2 | 3.6 | 1.1 | | |
| Ion-exchanged water | 42.0 | 42.0 | 42.1 | | | | | | 41.9 | 42.1 |
| Content of first particle/content of resin component (times) | 1.4 | 5.0 | 5.0 | 3.0 | 1.4 | 1.3 | 4.1 | 4.2 | 1.2 | 1.2 |
| Refractive index $n_M$ of dry film | 1.83 | 2.14 | 1.87 | 2.07 | 1.88 | 1.89 | 2.15 | 2.17 | 1.82 | 1.82 |
| Content $V_1$ (vol%) of first particle | 2.1 | 7.0 | 4.1 | 4.0 | 3.9 | 1.9 | 6.0 | 3.6 | 4.1 | 2.0 |
| Content $V_2$ (vol%) of second particle | 16.0 | 7.8 | 9.2 | 10.3 | 8.0 | 14.0 | 6.8 | 13.8 | 8.8 | 15.6 |
| Content $V_3$ (vol%) of resin component | 4.8 | 4.7 | 3.4 | 3.8 | 7.7 | 4.2 | 4.1 | 2.4 | 9.5 | 4.6 |
| X (%) | 69.9 | 40.0 | 55.1 | 56.9 | 40.8 | 69.7 | 40.2 | 69.7 | 39.3 | 70.3 |
| Y (%) | 30.4 | 59.8 | 54.7 | 51.3 | 33.6 | 31.1 | 59.4 | 60.0 | 30.1 | 30.3 |

[Table 4-3]

| Table 4-3: Composition and characteristics of ink | | | | | | | | | | |
|---|---|---|---|---|---|---|---|---|---|---|
| | Example | | | | | | | | | |
| | 21 | 22 | 23 | 24 | 25 | 26 | 27 | 28 | 29 | 30 |
| First particle 1 | 13.8 | 7.6 | 15.3 | 25.6 | 7.6 | 13.8 | 16.3 | 15.8 | | 15.4 |
| First particle 2 | | | | | | | | | 16.6 | |
| First particle 3 | | | | | | | | | | |
| First particle 4 | | | | | | | | | | |
| First particle 5 | | | | | | | | | | |
| First particle 6 | | | | | | | | | | |
| First particle 7 | | | | | | | | | | |
| Second particle 1 | 31.3 | | 19.4 | 16.6 | | 31.4 | 26.1 | 25.3 | 19.1 | |

(continued)

| Table 4-3: Composition and characteristics of ink | | | | | | | | | | |
|---|---|---|---|---|---|---|---|---|---|---|
| | Example | | | | | | | | | |
| | 21 | 22 | 23 | 24 | 25 | 26 | 27 | 28 | 29 | 30 |
| Second particle 2 | | | | | | | | | | 20.0 |
| Second particle 3 | | 34.4 | | | 34.5 | | | | | |
| Second particle 4 | | | | | | | | | | |
| Second particle 5 | | | | | | | | | | |
| Second particle 6 | | | | | | | | | | |
| Second particle 7 | | | | | | | | | | |
| Second particle 8 | | | | | | | | | | |
| Second particle 9 | | | | | | | | | | |
| Resin component 1 | 3.4 | 6.6 | 13.3 | 6.3 | 6.6 | 3.4 | | | 12.8 | 13.3 |
| Resin component 2 | | | | | | | | | | |
| Resin component 3 | | | | | | | | | | |
| Resin component 4 | | | | | | | 6.1 | | | |
| Resin component 5 | | | | | | | | 7.3 | | |
| Resin component 6 | | | | | | | | | | |
| Gly | 2.0 | 2.0 | 2.0 | 2.0 | 2.0 | 2.0 | 2.0 | 2.0 | 2.0 | 2.0 |
| EG | 7.0 | 7.0 | 7.0 | 7.0 | 7.0 | 7.0 | 7.0 | 7.0 | 7.0 | 7.0 |
| MEK | | | | | | | | | | |
| DEGMEE | | | | | | | | | | |
| AE100 | 0.5 | 0.5 | 0.5 | 0.5 | 0.5 | 0.5 | 0.5 | 0.5 | 0.5 | 0.5 |
| DISPERBYK-110 | | | | | | | | | | |
| DISPERBYK-111 | | | | | | | | | | |
| Ion-exchanged water | 42.0 | 41.9 | 41.9 | 42.0 | 41.9 | 42.0 | 42.0 | 42.0 | 42.0 | 41.9 |
| Content of first particle/content of resin component (times) | 4.1 | 1.2 | 1.2 | 4.1 | 1.2 | 4.1 | 2.7 | 2.2 | 1.3 | 1.2 |
| Refractive index $n_M$ of dry film | 2.13 | 1.81 | 1.81 | 2.13 | 1.81 | 2.13 | 1.98 | 1.97 | 1.87 | 1.82 |
| Content $V_1$ (vol%) of first particle | 3.7 | 2.0 | 4.0 | 6.8 | 2.0 | 3.7 | 4.3 | 4.2 | 3.9 | 4.1 |
| Content $V_2$ (vol%) of second particle | 14.2 | 15.6 | 8.8 | 7.5 | 15.7 | 14.3 | 11.9 | 11.5 | 8.7 | 9.1 |
| Content $V_3$ (vol%) of resin component | 2.4 | 4.7 | 9.5 | 4.5 | 4.7 | 2.4 | 5.4 | 5.2 | 9.1 | 9.5 |
| X (%) | 70.0 | 70.0 | 39.5 | 39.9 | 70.1 | 70.1 | 55.1 | 55.0 | 40.1 | 40.1 |
| Y (%) | 60.7 | 29.9 | 29.6 | 60.2 | 29.9 | 60.7 | 44.3 | 44.7 | 30.0 | 30.1 |

[Table 4-4]

| Table 4-4: Composition and characteristics of ink | | | | | | | | | | |
|---|---|---|---|---|---|---|---|---|---|---|
| | Comparative Example | | | | | | | | | |
| | 1 | 2 | 3 | 4 | 5 | 6 | 7 | 8 | 9 | 10 |
| First particle 1 | 8.0 | 5.5 | 22.3 | 15.8 | 26.4 | 15.4 | 7.6 | | | |

(continued)

| Table 4-4: Composition and characteristics of ink | | | | | | | | | | |
|---|---|---|---|---|---|---|---|---|---|---|
| | Comparative Example | | | | | | | | | |
| | 1 | 2 | 3 | 4 | 5 | 6 | 7 | 8 | 9 | 10 |
| First particle 2 | | | | | | | | | | |
| First particle 3 | | | | | | | | 16.6 | 8.4 | |
| First particle 4 | | | | | | | | | | 10.0 |
| First particle 5 | | | | | | | | | | |
| First particle 6 | | | | | | | | | | |
| First particle 7 | | | | | | | | | | |
| Second particle 1 | 28.6 | 37.1 | 22.7 | 16.8 | 17.9 | | | 19.1 | 33.7 | |
| Second particle 2 | | | | | | | | | | |
| Second particle 3 | | | | | | | | | | |
| Second particle 4 | | | | | | | | | | |
| Second particle 5 | | | | | | 19.9 | 34.3 | | | |
| Second particle 6 | | | | | | | | | | 15.0 |
| Second particle 7 | | | | | | | | | | |
| Second particle 8 | | | | | | | | | | |
| Second particle 9 | | | | | | | | | | |
| Resin component 1 | 11.9 | 5.8 | 3.5 | 15.9 | 4.2 | 13.3 | 6.5 | 12.8 | 6.4 | |
| Resin component 2 | | | | | | | | | | 2.0 |
| Resin component 3 | | | | | | | | | | |
| Resin component 4 | | | | | | | | | | |
| Resin component 5 | | | | | | | | | | |
| Resin component 6 | | | | | | | | | | |
| Gly | 2.0 | 2.0 | 2.0 | 2.0 | 2.0 | 2.0 | 2.0 | 2.0 | 2.0 | 2.0 |
| EG | 7.0 | 7.0 | 7.0 | 7.0 | 7.0 | 7.0 | 7.0 | 7.0 | 7.0 | 7.0 |
| MEK | | | | | | | | | | |
| DEGMEE | | | | | | | | | | |
| AE100 | 0.5 | 0.5 | 0.5 | 0.5 | 0.5 | 0.5 | 0.5 | 0.5 | 0.5 | 0.5 |
| DISPERBYK-110 | | | | | | | | | | 0.5 |
| DISPERBYK-111 | | | | | | | | | | |
| Ion-exchanged water | 42.0 | 42.1 | 42.0 | 42.0 | 42.0 | 41.9 | 42.1 | 42.0 | 42.0 | 63.0 |
| Content of first particle/content of resin component (times) | 0.7 | 0.9 | 6.4 | 1.0 | 6.3 | 1.2 | 1.2 | 1.3 | 1.3 | 4.0 |
| Refractive index $n_M$ of dry film | 1.71 | 1.77 | 2.24 | 1.78 | 2.23 | 1.82 | 2.55 | 1.87 | 1.87 | 1.52 |
| Content $V_1$ (vol%) of first particle | 2.1 | 1.5 | 5.9 | 4.2 | 7.0 | 4.1 | 2.0 | 3.9 | 2.0 | 2.4 |
| Content $V_2$ (vol%) of second particle | 13.0 | 16.9 | 10.3 | 7.6 | 8.1 | 9.0 | 15.6 | 8.7 | 15.3 | 6.8 |
| Content $V_3$ (vol%) of resin component | 8.5 | 4.1 | 2.5 | 11.4 | 3.0 | 9.5 | 4.6 | 9.1 | 4.6 | 2.1 |

(continued)

| Table 4-4: Composition and characteristics of ink | | | | | | | | | | |
|---|---|---|---|---|---|---|---|---|---|---|
| | Comparative Example | | | | | | | | | |
| | 1 | 2 | 3 | 4 | 5 | 6 | 7 | 8 | 9 | 10 |
| X (%) | 55.1 | 75.1 | 55.1 | 32.8 | 44.8 | 39.8 | 70.3 | 40.1 | 69.9 | 60.2 |
| Y (%) | 19.8 | 26.8 | 70.2 | 26.9 | 70.0 | 30.1 | 30.3 | 30.0 | 30.3 | 53.3 |

[Table 4-5]

| Table 4-5: Composition and characteristics of ink | | | | | | | | | |
|---|---|---|---|---|---|---|---|---|---|
| | Comparative Example | | | | | | | | |
| | 11 | 12 | 13 | 14 | 15 | 16 | 17 | 18 | 19 |
| First particle 1 | 20.0 | 8.0 | | | 19.0 | | | | |
| First particle 2 | | | | | | | | | |
| First particle 3 | | | | | | | | | |
| First particle 4 | | | | | | | | | |
| First particle 5 | | | | | | | | | |
| First particle 6 | | | 8.0 | | | 11.0 | 4.0 | 28.5 | 16.0 |
| First particle 7 | | | | 13.0 | | | | | |
| Second particle 1 | | 28.6 | 28.6 | 41.0 | | | | | |
| Second particle 2 | 20.0 | | | | | | | | |
| Second particle 3 | | | | | | | | | |
| Second particle 4 | | | | | | | | | |
| Second particle 5 | | | | | | | | | |
| Second particle 6 | | | | | | | | | |
| Second particle 7 | | | | | | | | | |
| Second particle 8 | | | | | | 10.0 | 33.0 | 14.9 | 30.4 |
| Second particle 9 | | | | | 25.3 | | | | |
| Resin component 1 | | | 11.9 | 7.3 | 7.3 | | | | |
| Resin component 2 | 2.0 | | | | | | | | |
| Resin component 3 | | 11.9 | | | | | | | |
| Resin component 4 | | | | | | | | | |
| Resin component 5 | | | | | | | | | |
| Resin component 6 | | | | | | 5.8 | 3.0 | 1.5 | 1.7 |
| Gly | 2.0 | 2.0 | 2.0 | 2.0 | 2.0 | | | | |
| EG | 7.0 | 7.0 | 7.0 | 7.0 | 7.0 | | | | |
| MEK | | | | | | 12.5 | 12.4 | 12.0 | 12.2 |
| DEGMEE | | | | | | 43.6 | 43.4 | 41.9 | 42.7 |
| AE100 | 0.5 | 0.5 | 0.5 | 0.5 | 0.5 | | | | |
| DISPERBYK-110 | 0.5 | | | | | | | | |
| DISPERBYK-111 | | | | | | 5.0 | 1.2 | 3.6 | 1.1 |
| Ion-exchanged water | 48.0 | 42.0 | 42.0 | 42.1 | 42.1 | | | | |

(continued)

| Table 4-5: Composition and characteristics of ink | Comparative Example | | | | | | | | |
|---|---|---|---|---|---|---|---|---|---|
| | 11 | 12 | 13 | 14 | 15 | 16 | 17 | 18 | 19 |
| Content of first particle/content of resin component (times) | 8.0 | 0.7 | 0.7 | 1.8 | 2.6 | 1.0 | 1.0 | 5.6 | 5.7 |
| Refractive index $n_M$ of dry film | 1.52 | 1.50 | 1.71 | 1.62 | 2.02 | 2.58 | 2.58 | 2.58 | 2.58 |
| Content $V_1$ (vol%) of first particle | 5.3 | 2.1 | 2.0 | 2.5 | 5.0 | 2.8 | 1.0 | 7.3 | 4.1 |
| Content $V_2$ (vol%) of second particle | 9.1 | 13.0 | 13.0 | 18.6 | 6.4 | 4.5 | 15.0 | 6.8 | 13.8 |
| Content $V_3$ (vol%) of resin component | 2.1 | 8.5 | 8.5 | 5.2 | 5.2 | 7.7 | 3.0 | 3.6 | 2.0 |
| X (%) | 55.2 | 55.1 | 55.3 | 70.7 | 38.6 | 30.0 | 78.9 | 38.4 | 69.3 |
| Y (%) | 71.6 | 19.8 | 19.0 | 32.5 | 49.0 | 26.7 | 25.0 | 67.0 | 67.2 |

<Evaluation>

The prepared inks were each filled into an ink cartridge, and the ink cartridge was set in an ink jet recording apparatus (product name: "PIXUS PRO-10S", manufactured by CANON KABUSHIKI KAISHA) including a recording head that ejected a liquid through action of thermal energy. In this Example, the recording duty of a solid image recorded under the following condition is defined as 100%: eight ink droplets each having a mass per droplet of 3.5 ng are applied to a unit region measuring 1/600 inch by 1/600 inch at a resolution of 600 dpi by 600 dpi. An ink was ejected from ejection orifices in the lower half of the longitudinal direction of the recording head to record an image measuring 50 mm by 50 mm on a recording medium with the above-mentioned ink jet recording apparatus. After the recording medium was conveyed by a half of the length in the longitudinal direction of the recording head, the recorded image was dried with warm air at 80°C for 5 minutes and then subjected to heat treatment for 1 hour in a constant temperature oven at 100°C. The temperature of the warm air was the temperature at a warm air outlet, and was measured with a mold surface sensor (product name: "MF-O-K", manufactured by Toa Electric Inc.). A piece of a PET film (product name: "LLRPCF1372", manufactured by Sakurai Co., Ltd.) cut to an A4 size was used as the recording medium. In the present invention, in the following evaluation criteria of each item, the levels "A" and "B" were defined as acceptable levels, and the level "C" was defined as an unacceptable level. The evaluation results are shown in Table 5.

(Concealing Property)

The concealing rate of the recorded image was measured and calculated by a method in conformity with ISO 2471:2008, and the concealing property of the image was evaluated. In ISO 2471:2008, the reflectance of paper to be tested is measured with a white plate and a black plate backing the paper, and the concealing rate is calculated by the following equation (C).

$$\text{Concealing rate} = (R_0/R_\infty) \times 100 \cdots (C)$$

$R_0$: Reflectance measured with black plate backing
$R_\infty$: Reflectance measured with white plate backing

In this Example, the concealing rate of the recorded image was measured and calculated through use of concealing rate test paper (manufactured by TP Giken Co., Ltd., with a certificate of inspection from Japan Paint Inspection and testing Association) in conformity with the above-mentioned method. Further, the concealing property of the image was evaluated based on the evaluation criteria described below.

A: The concealing rate of the image was 52% or more.
B: The concealing rate of the image was 44% or more to less than 52%.
C: The concealing rate of the image was less than 44%.

(Sedimentation Resistance)

The prepared ink was placed in a cylindrical sample container to a height of 24 mm and was subjected to centrifugation at a centrifugal force of 100 G for 10 hours. After the centrifugation, the height (mm) of a supernatant portion was measured, and the sedimentation resistance of the ink was evaluated based on the evaluation criteria described below. Next, the sample container subjected to the centrifugation was tilted by 90° so that a liquid portion was removed. After that, under a state in which the sample container was returned to the original position, the presence or absence of a precipitate (sediment having lost fluidity) in a bottom portion was checked. When the precipitate was present, the thickness of the precipitate from the bottom portion was measured.

   A: The average thickness of the precipitate was 1 mm or less.
   B: The average thickness of the precipitate was more than 1 mm to 5 mm or less.
   C: The average thickness of the precipitate was more than 5 mm.

(Scratch Resistance)

The recording medium having the image recorded thereon was set in a friction tester (product name: "CROCK METER", manufactured by Toyo Seiki Seisaku-sho, Ltd.), and the surface of the image was rubbed 10 times back and forth with a cotton cloth.

After that, the state of the image was visually observed, and the scratch resistance of the image was evaluated based on the evaluation criteria described below.

   A: The ink did not migrate to the cotton cloth, and the cotton cloth was not stained with the ink color.
   B: The ink migrated to the cotton cloth and the cotton cloth was stained with the ink color, but the surface of the recording medium under the image did not appear.
   C: The ink migrated to the cotton cloth and the cotton cloth was stained with the ink color, and the surface of the recording medium under the image appeared.

[Table 5]

| Table 5: Evaluation results | | | | | |
|---|---|---|---|---|---|
| | | | Concealing property | Sedimentation resistance | Scratch resistance |
| Example | 1 | | A | A | A |
| | 2 | | A | A | A |
| | 3 | | A | A | A |
| | 4 | | A | A | A |
| | 5 | | A | A | A |
| | 6 | | A | A | A |
| | 7 | | A | A | A |
| | 8 | | A | A | A |
| | 9 | | A | A | A |
| | 10 | | A | A | A |
| | 11 | | A | A | A |
| | 12 | | A | A | A |
| | 13 | | A | A | A |
| | 14 | | A | A | A |
| | 15 | | A | A | A |
| | 16 | | A | A | A |
| | 17 | | A | A | A |
| | 18 | | A | A | A |
| | 19 | | B | A | A |
| | 20 | | B | A | A |
| | 21 | | B | A | A |
| | 22 | | B | A | A |
| | 23 | | B | A | A |
| | 24 | | B | A | A |
| | 25 | | B | A | A |
| Example | 26 | | B | A | A |
| | 27 | | A | A | B |
| | 28 | | A | A | B |
| | 29 | | A | B | A |
| | 30 | | B | A | A |

(continued)

| Table 5: Evaluation results | | | Concealing property | Sedimentation resistance | Scratch resistance |
|---|---|---|---|---|---|
| Comparative Example | | 1 | C | A | A |
| | | 2 | C | A | A |
| | | 3 | A | A | C |
| | | 4 | C | A | A |
| | | 5 | A | A | C |
| | | 6 | C | A | A |
| | | 7 | C | A | A |
| | | 8 | C | C | A |
| | | 9 | C | C | A |
| | | 10 | C | A | A |
| | | 11 | B | A | C |
| | | 12 | C | A | A |
| | | 13 | C | A | A |
| | | 14 | C | A | A |
| | | 15 | C | A | A |
| | | 16 | C | A | A |
| | | 17 | C | A | A |
| | | 18 | C | A | A |
| | | 19 | C | A | A |

The evaluation result of the concealing property of Example 13 was "A" that was the same as Example 1, but Example 1 was superior.

The present invention is not limited to the embodiments described above, and various changes and modifications may be made without departing from the spirit and scope of the present invention. The following claims are appended hereto in order to make the scope of the present invention public.

The present application claims priority based on Japanese Patent Application No. 2022-207097 filed on December 23, 2022, Japanese Patent Application No. 2022-207098 filed on December 23, 2022, and Japanese Patent Application No. 2023-205592 filed on December 5, 2023, and the entire contents thereof are incorporated herein by reference.

[Reference Signs List]

1 first particle
2 second particle
3 resin component
4 dry film

**Claims**

1. An ink for ink jet comprising:

    a first particle;
    a second particle; and

a resin component,

wherein the first particle has a refractive index of 2.10 or more,

wherein the first particle has a volume-based cumulative 50% particle diameter of 100 nm or less,

wherein the second particle has a refractive index of 1.50 or less,

wherein the second particle has a volume-based cumulative 50% particle diameter of 120 nm or more,

wherein the resin component comprises at least one kind selected from the group consisting of: a resin particle; and a solvent-soluble resin,

wherein the resin component has a refractive index of 1.50 or more, and

wherein a content (mass%) of the first particle is 1.1 times or more to 5.5 times or less in terms of a mass ratio to a content (mass%) of the resin component.

2. The ink according to claim 1, wherein a refractive index ($n_2$) of the second particle, and a refractive index ($n_M$) of a dry film formed of the first particle and the resin component satisfy a relationship of the following formula (1).

$$n_2 + 0.4 \leq n_M \cdots (1)$$

3. The ink according to claim 1 or 2, wherein the first particle is at least one kind selected from the group consisting of: titanium oxide; and zirconia.

4. The ink according to any one of claims 1 to 3, wherein the first particle is titanium oxide.

5. The ink according to any one of claims 1 to 4, wherein the second particle is at least one kind selected from the group consisting of: a silica particle; a silicone-based particle; and a polytetrafluoroethylene resin particle.

6. The ink according to any one of claims 1 to 5,

wherein a ratio of a content (vol%) of the second particle to a total content (vol%) of the first particle, the second particle, and the resin component is 40.0% or more to 70.0% or less, and

wherein a ratio of a content (vol%) of the first particle to a total content (vol%) of the first particle and the resin component is 30.0% or more to 60.0% or less.

7. The ink according to any one of claims 1 to 6, wherein an absolute value of a zeta potential of the second particle is smaller than an absolute value of a zeta potential of the first particle.

8. The ink according to any one of claims 1 to 7, wherein an absolute value of a zeta potential of the second particle is smaller than both of an absolute value of a zeta potential of the first particle and an absolute value of a zeta potential of the resin component.

9. The ink according to any one of claims 1 to 8, wherein the resin component is a non-crosslinked resin.

10. The ink according to any one of claims 1 to 9, wherein the first particle has a volume-based cumulative 50% particle diameter of 60 nm or less.

11. The ink according to any one of claims 1 to 10, wherein the second particle has a volume-based cumulative 50% particle diameter of 140 nm or more.

12. An ink cartridge comprising:

an ink; and

an ink storage portion configured to store the ink,

wherein the ink comprises the ink of any one of claims 1 to 11.

13. An ink jet recording method comprising ejecting an ink from a recording head of an ink jet system to record an image on a recording medium,

wherein the ink comprises the ink of any one of claims 1 to 11.

FIG. 1

FIG. 2

FIG. 3

# FIG. 4A

# FIG. 4B

## INTERNATIONAL SEARCH REPORT

| International application No. |
| --- |
| **PCT/JP2023/045243** |

| | |
| --- | --- |
| **A.** | **CLASSIFICATION OF SUBJECT MATTER** |

*C09D 11/322*(2014.01)i; *B41J 2/01*(2006.01)i; *B41J 2/21*(2006.01)i; *B41M 5/00*(2006.01)i
FI:   C09D11/322; B41M5/00 120; B41J2/01 501; B41J2/21

According to International Patent Classification (IPC) or to both national classification and IPC

| | |
| --- | --- |
| **B.** | **FIELDS SEARCHED** |

Minimum documentation searched (classification system followed by classification symbols)

C09D11/322; B41J2/01; B41J2/21; B41M5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2016-137482 A (CANON KABUSHIKI KAISHA) 04 August 2016 (2016-08-04) claim 16, paragraphs [0024], [0027]-[0030], [0041], example 2 | 1-6, 9-13 |
| X | JP 2021-155502 A (SEIKO EPSON CORPORATION) 07 October 2021 (2021-10-07) claim 1, paragraph [0059], examples | 1-6, 9-13 |
| Y | | 7-8 |
| Y | JP 2019-112602 A (SEIKO EPSON CORPORATION) 11 July 2019 (2019-07-11) paragraph [0014] | 7-8 |
| A | JP 2014-189558 A (SEIKO EPSON CORPORATION) 06 October 2014 (2014-10-06) entire text | 1-13 |
| A | JP 2011-231201 A (SEIKO EPSON CORPORATION) 17 November 2011 (2011-11-17) entire text | 1-13 |
| A | JP 2014-95058 A (MIMAKI ENG CO., LTD.) 22 May 2014 (2014-05-22) entire text | 1-13 |

[✓] Further documents are listed in the continuation of Box C.          [✓] See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 February 2024** | **05 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2023/045243** |

## C.    DOCUMENTS CONSIDERED TO BE RELEVANT

| Category* | Citation of document, with indication, where appropriate, of the relevant passages | Relevant to claim No. |
| --- | --- | --- |
| A | JP 58-122974 A (DAI NIPPON TORYO CO., LTD.) 21 July 1983 (1983-07-21) <br> entire text | 1-13 |
| A | US 2014/0123874 A1 (KABALNOV, Alexey S.) 08 May 2014 (2014-05-08) <br> entire text | 1-13 |

Form PCT/ISA/210 (second sheet) (July 2022)

**EP 4 636 047 A1**

| INTERNATIONAL SEARCH REPORT | | International application No. |
|---|---|---|
| Information on patent family members | | **PCT/JP2023/045243** |

| Patent document cited in search report | | | Publication date (day/month/year) | Patent family member(s) | | | Publication date (day/month/year) |
|---|---|---|---|---|---|---|---|
| JP | 2016-137482 | A | 04 August 2016 | US | 2017/0313897 | A1 | |
| | | | | claim 18, paragraphs [0031]-[0037], example 2 | | | |
| | | | | WO | 2016/117632 | A1 | |
| JP | 2021-155502 | A | 07 October 2021 | US | 2021/0301164 | A1 | |
| | | | | claim 1, examples | | | |
| JP | 2019-112602 | A | 11 July 2019 | US | 2019/0194482 | A1 | |
| | | | | paragraph [0079] | | | |
| JP | 2014-189558 | A | 06 October 2014 | US | 2014/0292899 | A1 | |
| JP | 2011-231201 | A | 17 November 2011 | US | 2011/0262724 | A1 | |
| | | | | EP | 2386613 | A1 | |
| | | | | CN | 102234463 | A | |
| JP | 2014-95058 | A | 22 May 2014 | WO | 2014/073680 | A1 | |
| JP | 58-122974 | A | 21 July 1983 | (Family: none) | | | |
| US | 2014/0123874 | A1 | 08 May 2014 | WO | 2012/170032 | A1 | |
| | | | | EP | 2718381 | A1 | |
| | | | | CN | 103534320 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013060513 A
- WO 2018190848 A
- JP 2022207097 A
- JP 2022207098 A
- JP 2023205592 A

**Non-patent literature cited in the description**

- **KAGAKU KOGAKU**. *Ronbunshu*, 2003, vol. 29 (6), 753-759